**Europäisches Patentamt**

**European Patent Office**

**Office européen des brevets**

(19)

(11) Veröffentlichungsnummer: **0 126 320**
**B1**

(12)

# EUROPÄISCHE PATENTSCHRIFT

(45) Veröffentlichungstag der Patentschrift:
20.05.87

(21) Anmeldenummer: **84104602.2**

(22) Anmeldetag: **24.04.84**

(51) Int. Cl.⁴: **C 08 G  6/02,** C 08 G  12/00,
C 08 G  12/40, C 08 G  14/00,
C 08 G  14/12, C 08 G  16/00,
C 08 G  16/04, C 04 B  24/00

(54) **Co-Kondensationsprodukte von Keton-Aldehyd-Harzen.**

(30) Priorität: **27.04.83 DE 3315152**

(43) Veröffentlichungstag der Anmeldung:
**28.11.84 Patentblatt 84/48**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**DE-A-2 916 705
DE-B-2 341 923
FR-A-2 249 047
US-A-2 321 451
US-A-2 640 043
US-A-2 674 591**

**Die Akte enthält technische Angaben, die nach dem Eingang der Anmeldung eingereicht wurden und die nicht in dieser Patentschrift enthalten sind.**

(73) Patentinhaber: **SKW Trostberg Aktiengesellschaft,
Dr.- Albert- Frank- Strasse 32 Postfach 1150/1160,
D-8223 Trostberg (DE)**

(72) Erfinder: **Plank, Johann, Dr., Herzog- Otto- Strasse
2, D-8223 Trostberg (DE)**
Erfinder: **Aignesberger, Alois, Dr.,
Pienzenauerstrasse 16, D-8223 Trostberg (DE)**

(74) Vertreter: **Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Säuregruppen enthaltende hydrophile Co-Kondensationsprodukte von Keton-Aldehyd-Harzen.

Die basenkatalysierte Kondensation von Ketonen mit Aldehyden ist seit langem bekannt. Sie führt in ihrer Endstufe zu wasserunlöslichen Harzen (vgl. z.B. J. Scheiber, "Chemie und Technologie der künstlichen Harze", Band 1, Stuttgart 1961, Seite 164 ff).

Die Einführung von Säuregruppen in das Keton-Aldehyd-Harz ermöglicht die Bildung wasserlöslicher Kondensationsprodukte. So sind z. B. aus der DE-AS 23 41 923 gut wasserlösliche Kondensationsprodukte aus Cycloalkanonen, Formaldehyd und Sulfit bekannt, welche sich z. B. als Zusätze für anorganische Bindemittel zur Verbesserung ihrer Eigenschaften eignen. Andere, für den gleichen Zweck bekannte Zusätze sind Kondensationsprodukte aus Formaldehyd, Säuregruppen einführender Verbindung und Aminoplastbildnern, wie z. B. Harnstoff oder Melamin (vgl. DE-PS 16 71 058 und DE-PS 2359291).

Diese bekannten Kondensationsprodukte weisen jedoch einige Nachteile auf: Ein Nachteil der wasserlöslichen Cycloalkanon-Aldehyd-Kondensationsprodukte ist insbesondere deren sehr geringe thermische Stabilität; so entstehen z. B. beim Einengen einer Lösung der Cycloalkanon-Formaldehyd-Kondensationsprodukte selbst unter schonenden Bedingungen (ca. 50°C) bereits weitgehend wasserunslösliche pulverförmige Verbindungen; Melaminharze sind aufgrund des relativ teueren Ausgangsstoffes Melamin für eine Massenanwendung nur bedingt geeignet; Harnstoffharze besitzen eine geringe Lagerstabilität und Ligninsulfonatharze, welche aus sulfithaltigen Ablaugen der Papierindustrie hergestellt werden und häufig Verunreinigungen enthalten, sind in ihrer Qualität uneinheitlich und zeigen unerwünschte Nebeneffekte wie z. B. eine Abbindeverzögerung.

Aus der DE-AS 29 16 705 ist die Herstellung eines Harzproduktes durch Co-Kondensation eines sulfitmodifizierten Melaminharzes mit Ligninsulfonat-Harnstoff-Formaldehydharzen bekannt. Auf diese Weise wird zwar das im Zusammenhang mit Melaminharzen auftretende Problem des teuren Ausgangsstoffes Melamin durch teilweise Substitution mit Ligninsulfonat-Harnstoff gelöst; die Darstellung dieser Harze erfordert jedoch ein sehr arbeitsintensives mehrstufiges Verfahren, wodurch die Herstellungskosten sehr hoch und unwirtschaftlich werden.

Die US-A-2 321 451 beschreibt wasserlösliche Kondensationsprodukte zur Verwendung als z.B. Textilhilfsmittel oder Gerbmittel, die erhalten werden durch Kondensation von Phenolen oder Thiophenolen mit einer gesättigten Carbonylverbindung aus der Gruppe gesättigte Aldehyde und Ketone und einer ungesättigten Carbonylverbindung aus der Gruppe ungesättigte Aldehyde und Ketone in Gegenwart einer für die Wasserlöslichkeit ausreichenden Menge schwefliger Säure unter sauren pH-Bedingungen.

Aufgabe der vorliegenden Erfindung ist deshalb die Bereitstellung wasserlöslicher, als Zusätze zur Verbesserung der Eigenschaften wäßriger Systeme gut geeigneter Kondensationsprodukte, die auf wirtschafteile Weise erhältlich sind und die aufgezeig Nachteile nicht aufweisen. Diese Aufgabe wird mit dem Gegenstand der vorliegenden Anmeldung gelöst.

Gegenstand der Erfindung sind Säuregruppen enthaltende hydrophile Co-Kondensationsprodukte von Keton-Aldehyd-Harzen, die erhältlich sind durch Co-Kondensation von Ketonen aus der Gruppe symmetrische oder unsymmetrische Ketone, die mindestens einen nichtaromatischen Rest enthalten, und/oder Cycloalkanone und Aldehyden mit Säuregruppen einführenden Verbindungen und mit Aminoplastbildnern, aromatischen Verbindungen aus der Gruppe Phenole und andere reaktiv substituierte Aromaten und mehrkernige Aromaten, und/oder deren Vorkondensaten oder Kondensationsprodukten, und/oder mit durch Behandlung von Holz mit Natriumsulfit erhaltenen Ligninsulfonatharzen und/oder mit Cellulosederivaten aus der Gruppe Celluloseäther und Celluloseester im alkalischen pH-Bereich.

Die erfindungsgemäßen Co-Kondensationsprodukte besitzen im Gegensatz zu den nicht co-kondensierten Cycloalkanon-Aldehyd-Harzen eine überraschend hohe thermische SStabilität. Sie stellen deshalb wertvolle Zusatzmittel dar, die aufgrund ihrer Ausgangsprodukte und des einfach und wirtschaftlich durchführbaren Verfahrens auch für eine Massenanwendung geeignet sind.

Als Säuregruppen enthalten die erfindungsgemäßen Kondensationsprodukte vorzugsweise Carboxy-, Phosphono-, Sulfino- und insbesondere Sulfogruppen, wobei diese Gruppen auch über Stickstoff oder Sauerstoff oder über -N-alkylen oder -O-alkylen-Brücken gebunden sein können, und dann z. B. Sulfamido-, Sulfooxy-, Sulfoalkyloxy-, Sulfinoalkyloxy- oder auch Phosphonooxygruppen sind. Eine Alkylgruppe in diesen Resten besitzt vorzugsweise 1 bis 5 Kohlenstoffatome und ist insbesondere Methyl oder Äthyl. Die erfindungsgemäßen Kondensationsprodukte können auch zwei oder mehrere verschiedene Säuregruppen enthalten.

Der Rest R der Aldehyde R-CHO kann Wasserstoff, ein aromatischer oder nichtaromatischer (cyclischer oder acyclischer) carbo- oder heterocyclischer Rest oder auch araliphatischer Rest sein, in dem die Zahl der Kohlenstoffatome oder Kohlenstoff- und Heteroatome vorzugsweise 1 bis 10 ist. Aromatische Reste sind z. B. $\alpha$- oder $\beta$-Naphthyl, Phenyl oder Furfuryl, araliphatische Reste z. B.

Benzyl oder Phenäthyl, nichtaromatische Reste z. B. Cycloalkyl- und insbesondere Alkylreste, vorzugsweise mit 1 bis 6 Kohlenstoffatomen, wie z. B. Methyl, Äthyl, Propyl, Butyl. Die aliphatischen Reste können auch verzweigt oder ungesättigt sein, und sind dann z. B. Vinyl.

Die Aldehyde können auch durch einen oder mehrere Substituenten, die die Kondensationsreaktion nicht beeinträchtigen, substituiert sein, wie z. B. durch Amino-, Hydroxy-, Alkoxy- oder Alkoxycarbonylgruppen, und/oder auch durch die in den Kondensationsprodukten enthaltenen Säuregruppen. Es können auch Aldehyde mit mehr als einer Aldehydgruppe, z. B. Di- oder Trialdehyde, eingesetzt werden, die infolge ihrer erhöhten Reaktivität in einigen Fällen besonders zweckmäßig sein können. Es können auch, z. B. bei den niederen gesättigten Aldehyden wie Formaldehyd oder Acetaldehyd, die polymeren Formen (z. B. Paraformaldehyd oder Paraldehyd) eingesetzt werden.

Beispiele für gesättigte aliphatische Aldehyde sind Formaldehyd (oder Paraformaldehyd), Acetaldehyd (oder Paraldehyd), Butyraldehyd; für substituierte gesättigte aliphatische Aldehyde 3-Methoxy-propionaldehyd, Acetaldol; für ungesättigte aliphatische Aldehyde Acrolein, Crotonaldehyd, Furfurol, 4-Methoxy-furfurol, Propargylaldehyd; für Dialdehyde Glyoxal, Glutardialdehyd. Besonders bevorzugt wird als Aldehyd Formaldehyd verwendet.

Erfindungsgemäß für die Kondensationsprodukte eingesetzte Ketone sind symmetrische oder unsymmetrische Ketone mit vorzugsweise acyclischen aliphatischen, araliphatischen und/oder aromatischen Kohlenwasserstoffresten, wobei aber mindestens ein Rest ein nichtaromatischer Rest ist, und/oder Cycloalkanone. Vorzugsweise besitzen die Kohlenwasserstoffreste 1 bis 10 Kohlenstoffatome.

Acyclische aliphatische Reste sind geradkettige oder verzwei&e, ungesättigte und vorzugsweise gesättigte Alkylreste, wie z. B. Methyl, Äthyl, Propyl, Butyl, Isobutyl, Nonyl. Araliphatische Reste sind z. B. Benzyl oder Phenäthyl, und aromatische Reste sind z. B. αoder β-Naphthyl und insbesondere Phenyl. Cycloalkanone leiten sich insbesondere von Cyclopentan und Cyclohexan bzw. deren methylsubstituierten Derivaten ab.

Die Ketone können auch durch einen oder mehrere Substituenten, die die Kondensationsreaktion nicht beeinträchtigen, substituiert sein, wie z. B. durch Amino-, Hydroxy-, Alkoxy- oder Alkoxycarbonylgruppen, und/oder auch durch die in den Kondensationsprodukten enthaltenen Säuregruppen.

Beispiele für gesättigte acyclische Ketone sind Aceton, Methyl-äthyl-keton, Methyl-tert.-butyl-keton; für substituierte gesättigte acyclische Ketone Methoxyaceton, Diacetonalkohol, Acetessigsäureäthylester; für ungesättigte aliphatische Ketone Methyl-vinyl-keton, Mesityloxid, Phoron; für araliphatische Ketone Acetophenon, 4-Methoxy-acetophenon, 4-Acetylbenzolsulfonsäure; für Diketone Diacetyl, Acetylaceton, Benzoylaceton.

Die Aldehyde und Ketone sind in reiner Form, aber auch in Form von Additionsverbindungen, mit dem die Säuregruppen einführenden Stoff, z. B. als Aldehydsulfitaddukt oder als Hydroxymethansulfinsäuresalz, einsetzbar. Es können auch zwei oder mehrere verschiedene Aldehyde und/oder Ketone eingesetzt werden.

Die Gesamtzahl der Kohlenstoffatome oder gegebenenfalls Kohlenstoffatome und Heteroatome in den erfindungsgemäß eingesetzten Aldehyden und Ketonen wird so gewählt, daß der hydrophile Charakter der Kondensationsprodukte erhalten bleibt. Sie ist deshalb auch abhängig von der Zahl der Säuregruppen im Kondensationsprodukt, aber auch vom Verhältnis Keton/Aldehyd und den übrigen Komponenten. Die bevorzugte Gesamtzahl beträgt für die Aldehyde 1 bis 11, für die Ketone 3 bis 12.

Das Molverhältnis von Ketonen/Aldehyden/Säuregruppen beträgt im allgemeinen 1/1 bis 6/0,02 bis 2, wobei aber je nach dem speziellen Verwendungszweck auch Abweichungen möglich sind.

Als erfindungsgemäß verwendbare Aminoplastbildner können alle für Aminoplaste, insbesondere zur Kondensation mit Formaldehyd üblichen Aminoplastbildner eingesetzt werden, also insbesondere Melamin und/oder Harnstoff, Guanamide, Dicyandiamid, aber auch z. B. Aminoessigsäure. Als aromatische Verbindungen können erfindungsgemäß alle zur Bildung von Phenolharzen geeigneten Phenole, also insbesondere Phenol, Kresole und Xylenole, verwendet werden, daneben aber auch reaktive substituierte und/oder mehrkernige Aromaten, wie z. B. Naphthalin und dessen Derivate. Anstelle der Aminoplastbildner oder Phenole können auch ganz oder teilweise deren Vorkondensate oder Kondensationsprodukte verschiedenen Kondensationsgrades, insbesondere deren Kondensationsprodukte mit Formaldehyd, verwendet werden, wie z. B. Novolake. Ebenso einsetzbar sind Säuregruppen enthaltende Aminoplastbildner und aromatische Verbindungen, wie z. B. Naphthalinsufonsäuren.

Erfindungsgemäß verwendete Ligninsulfonatharze sind die bei der Behandlung von Holz mit Natriumsulfit (Sulfitverfahren) gebildeten Ligninsulfonate.

Cellulosederivate sind Celluloseester, wie z. B. Celluloseacetat, und in erster Linie Celluloseäther, wie z. B. Methylcellulose, Hydroxymethylcellulose, Hydroxyäthylcellulose und Carboxymethylcellulose.

Der Anteil an Aminoplastbildnern und/oder aromatischen Verbindungen bzw. deren Kondensaten, an Ligninsulfonatharzen und/oder Cellulosederivaten richtet sich insbesondere nach der beabsichtigten Verwendung; er beträgt im allgemeinen 2 bis 50 Gew.-%, insbesondere 10 bis 40 Gew.-%, bezogen auf das fertige Kondensationsprodukt, wobei aber nach oben oder unten Abweichungen möglich sind.

Aufgrund ihrer Eigenschaften können die erfindungsgemäßen Co-Kondensationsprodukte als Verdickungsmittel, Dispergiermittel, oberflächenaktive Mittel (Tenside), Retentionsmittel, aber auch als Verflüssigungsmittel insbesondere für wäßrige Systeme verwendet werden. Die gewünschten Eigenschaften lassen sich dabei durch geeignete Wahl der Ausgangsverbindungen und der Molverhältnisse steuern. Als Beispiele für wäßrige Systeme, in denen erfindungsgemäße Produkte vorteilhaft eingesetzt werden können, seien genannt: Anorganische Bindemittelsuspensionen und -lösungen, Pigment- und Farbstoffdispersionen, Dispergiermittel für Öl-in-Wasser-Emulsionen, wäßrige Kaolin- oder Tonsuspensionen und Öl-Wasser-Kohle-Suspensionen. Infolge ihrer guten Thermostabilität eignen sich die erfindungsgemäßen Co-Kondensationsprodukte auch sehr gut als Zusatzmittel für anorganische Bindemittel. Als Dispergiermittel sind sie beispielsweise zur Herstellung von Fließbeton oder Fließestrich oder zur Verflüssigung von Tiefbohrzementmischungen geeignet, wofür aufgrund der auftretenden hohen Temperaturen eine ausreichende Temperaturbestädigkeit erforderlich ist. Erfindungsgemäße oberflächenaktive Mittel erniedrigen die Oberflächenspannung wäßriger Lösungen und sind z. B. als Schäumerzusatz bei der Herstellung von Schaumbeton geeignet. Ebenso können sie als Luftporen einführende Mittel für Mörtel oder Beton oder als grenzflächenaktiver Zusatz bei der tertiären Erdölförderung Verwendung finden. Als Retentionsmittel eignen sie sich zur Herstellung von Suspensionen hydraulischer Bindemittel, welche gutes Wasserrückhaltevermögen aufweisen (z. B. bei Tiefbohrzementschlämmen oder bei Fliesenklebern), und als Verdickungsmittel eignen sie sich z. B. in der Erdöltechnik sehr gut zur Viskositätserhöhung wäßriger Lösungen oder Suspensionen.

Vorzugsweise werden die Co-Kondensationsprodukte in Form von Lösungen oder Dispersionen, insbesondere in Form wäßriger Lösungen oder Dispersionen, verwendet. Der Feststoffgehalt dieser Zubereitungen beträgt im allgemeinen 10 bis 70, insbesondere 20 bis 50 Gew.-%.

Es können auch zwei oder mehrere der erfindungsgemäßen Co-Kondensationsprodukte mit gleicher, ähnlicher und/oder auch verschiedener Wirksamkeit verwendet werden, oder deren Gemische mit einem oder mehreren bekannten Zusatzmitteln mit gleicher, ähnlicher und/oder verschiedener Wirksamkeit, wie z. B. Gemische mit bekannten Dispergiermitteln, Tensiden oder Betonzusatzmitteln. Auf diese Weise lassen sich die Eigenschaften der Endprodukte oft noch zusätzlich verändern oder differenzieren.

Die vorherrschenden Eigenschaften der erfindungsgemäßen Co-Kondenationsprodukte hängen insbesondere von der Art und dem Molverhältnis der Komponenten ab. Der hydrophile Charakter nimmt mit sinkendem Anteil der Säuregruppen ab, wobei in der Regel bei einem Wert <,02 Mol eine vollständige Wasserlöslichkeit nicht mehr zu erzielen ist. Für Dispergiermittel eignen sich als Carbonylverbindungen vorzugsweise Formaldehyd, Glyoxal und Aceton, und ein Verhältnis Keton/Aldehyd/ Säuregruppen von 1/2 bis 4/0,25 bis 0,75, für oberflächenaktive Stoffe vorzugsweise Aldehyde und Ketone mit längeren Alkylresten oder mit Aralkylresten, die mindestens mehr als ein Kohlenstoffatom enthalten, und ein Verhältnis Keton/Aldehyd/Säuregruppen von 1/1 bis 6/0,05 bis 1, und für Retentions- und Verdickungsmittel Aldehyde und Ketone mit Alkylresten, die bis zu 3 Kohlenstoffatome enthalten, und ein Molverhältnis Keton/Aldehyd/Säuregruppen von 1/2 bis 6/0,6 bis 2. Weiterhin bestimmt die Art der Co-Kondensationskomponente die vorherrschenden Eigenschaften der erfindungsgemäßen Co-Kondensationsprodukte: Umsetzung des Keton-Aldehyd-Harzes mit Aminoplastbildner, aromatischen Verbindungen und/oder deren Kondensationsprodukte bewirkt eine Verbesserung der Dispergiereigenschaften, während durch Co-Kondensation mit Cellulosederivaten Retentions- bzw. Verdickungswirkung des Harzprodukts erzielt werden kann. Der Einbau von Ligninsulfonatharzen bedingt sowohl eine Erhöhung der Dispergierwirkung als auch der oberflächenaktiven Eigenschaften. Durch eine Kombination der für die spezifischen Eigenschaften vorzugsweise angewandten Bedingungen, z. B. durch Kombination der für eine bestimmte Eigenschaft besonders geeigneten Art der Ausgangsmaterialien mit dem für eine andere Art bevorzugten Molverhältnis können auch Mischeigenschaften erzielt werden. Gegenstand der Erfindung ist deshalb auch die Verwendung der erfindungsgemäßen Mittel als Verdickungsmittel, Retentionsmittel, oberflächenaktives Mittel, Dispergiermittel und/oder Verflüssigungsmittel, insbesondere als Zusatzmittel für wäßrige Systeme.

Die erfindungsgemäßen Kondensationsprodukte können durch Umsetzung der Komponenten unter alkalischen pH-Wertbedingungen erhalten werden, wobei nach Art einer Eintopfreaktion vorgegangen werden kann. Im allgemeinen wird der Aldehyd zu einer Lösung oder Suspension der restlichen Komponenten zugegeben; es sind aber auch andere Verfahrensvarianten möglich, wie z. B. Zugabe der Co-Kondensations-Komponente und/oder des Ketons, Zugabe eines Gemisches aus Aldehyd und Säuregruppen einführender Verbindung oder (z. B. im Falle von Sulfit) einer Verbindung des Aldehyds mit der Säuregruppen einführenden Verbindung, Zugabe eines Gemisches aus Keton und Säuregruppen einführender Verbindung oder einer Verbindung des Ketons mit der Säuregruppen einführenden Verbindung zu den restlichen Komponenten, oder gleichzeitiges Vorlegen aller Komponenten.

Die Reaktion springt im allgemeinen bereits bei gelindem Erhitzen an und verläuft dann exotherm, so daß in der Regel gekühlt wird. Zur Erzielung eines gleichmäßigen Produkts oder insbesondere beim Einsatz von weniger reaktionsfähigen Ausgangsprodukten ist eine Nacherhitzung zweckmäßig, die bis zu mehreren Stunden dauern kann.

Die Umsetzung wird im allgemeinen bei einem alkalischen pH-Wert durchgeführt, vorzugsweise im pH-Bereich von 10 bis 12. Die pH-Werteinstellung kann z. B. durch Zugabe von Hydroxiden von ein- oder zweiwertigen Kationen oder durch Vorlegen eines Säuregruppen einführenden Stoffs, wie z. B. von Natriumsulfit, erfolgen, welcher in wäßriger Lösung unter alkalischer Reaktion hydrolysiert.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwäßrige Lösungsmittelzusätze kommen insbesondere polare organische Lösungsmittel in Betracht wie z. B. Alkohole oder Säureester. Die Umsetzung kann sowohl im offenen Gefäß als auch im Autoklaven durchgeführt werden, wobei es zweckmäßig sein kann, in einer Inertgasatmosphäre, z. B. unter Stickstoff, zu arbeiten.

Die Co-Kondensationsprodukte können, wenn erwünscht, aus ihren nach der Umsetzung erhaltenen Lösungen oder Dispersionen z. B. durch Einengen am Rotationsverdampfer oder durch Sprühtrocknung isoliert werden. Die erhaltenen Lösungen oder Dispersionen können aber auch als solche direkt verwendet werden.

Als Aldehyd- und Keton-Ausgangsmaterialien werden die vorstehend genannten Aldehyde und Ketone eingesetzt, wobei auch Gemische von Ketonen und/oder Aldehyden eingesetzt werden können. Die Aldehyde und Ketone können sowohl in reiner Form als auch als Verbindung mit dem Säuregruppen einführenden Stoff (z.B. als Bisulfit-Additionsverbindung) zum Einsatz gelangen. Sie können sowohl in wäßriger als auch in nichtwäßriger, beispielsweise alkoholischer Lösung vorgelegt oder zugegeben werden. Die Umsetzung verläuft bei Aldehyden oder Ketonen mit niedriger Alkylkette besonders rasch und exotherm, während bei Verbindungen mit sterisch anspruchsvollen Substituenten wie z. B. Methyl-iso-butyl-keton oder Benzylaceton, zur vollständigen Umsetzung eine lange thermische Nachbehandlung erforderlich ist.

Als Säuregruppen einführende Verbindungen können alle unter den Kondensationsbedingungen die Säuregruppen einführenden Verbindungen eingesetzt werden, wie z. B. die reinen Säuren, Salze der Säuren mit ein- bis dreiwertigen anorganischen oder organischen Kationen oder Additionsverbindungen, insbesondere Additionsverbindungen mit den erfindungsgemäß verwendeten Aldehyden und Ketonen. Beispiele dafür sind Sulfite, Hydrogensulfite, Pyrosulfite, Bisulfit-Additionsverbindungen von Aldehyden oder Ketonen, Amidosulfonsäuresalze, Taurin-Salze, Sulfanilsäuresalze; Hydroxymethansulfinsäuresalze; Aminoessigsäuresalze; Phosphorigsäuresalze. Die Säuregruppen können aber auch ganz oder teilweise durch Säuregruppen enthaltende Aminoplastbildner, aromatische Verbindungen und/oder deren Kondensate, oder durch entsprechende Säuregruppen enthaltende Ligninsulfonate und/oder Cellulosederivate eingeführt werden.

Die nachfolgenden Beispiele erläutern die Erfindung näher, ohne sie darauf zu beschränken. Wenn nicht anders angegeben, bedeuten Teile und Prozentangaben Gewichtsteile und Gewichtsprozent.

**Beispiel 1**

Dispergiermittel
In einem Rührbehälter mit Innenthermometer und Kondensator werden in der angegebenen Reihenfolge
1.800 Gew.- Teile Wasser
630 Gew.-Teile Natriumsulfit
378 Gew.-Teile Melamin sowie
406 Gew.-Teile Aceton vorgelegt und bis zum Auftreten von Acetonrückfluß erhitzt.

Zu dieser weißen Suspension von ca. 60° C tropft man aus einem Vorratsgefäß 3.000 Gew.-Teile 30%iger Formaldehydlösung, wobei die Temperatur des Ansatzes bis zum Ende des Formalineintrags auf 95° C ansteigen soll.

Im Anschluß an die Formalinzugabe erfolgt eine 30 Minuten dauernde thermische Nachbehandlung des Ansatzes bei 95° C, worauf die Lösung abgekühlt und auf einen schwach alkalischen pH-Wert eingestellt wird.

Man erhält eine tiefrote und niedrigviskose Lösung mit einem Feststoffgehalt von 32%. Das Produkt wirkt als Dispergiermittel für Zementschlämmen.

**Beispiel 2**

Dispergiermittel
In einem Rührbehälter mit Innenthermometer und Kondensator werden
1.000 Gew.-Teile Wasser
8.400 Gew.-Teile 30%iger Formaldehydlösung
3.500 Gew.-Teile Melamin

2.800 Gew.-Teile Natriumpyrosulfit sowie
732 Gew.-Teile 20%iger Natronlauge vorgelegt
und nach dem in der deutschen Auslegeschrift
2.359.291 beschriebenen Verfahren ein
alkalisches Melaminharz-Vorkondensat
hergestellt.

Zu dieser Vorlage fügt man bei 50°C weitere
3.000 Gew.-Teile Wasser
3.150 Gew.-Teile Natriumsulfit sowie
2.900 Gew.-Teile Aceton
und erhitzt bis zum Auftreten eines
Acetonrückflusses. Anschließend werden aus
einem Vorratsgefäß 15.000 Gew.-Teile 30%iger
Formaldehydlösung eingespeist, wobei die
Temperatur des Ansatzes bis zum Ende der
Formalinzugabe auf 95°C ansteigen soll.

Im Anschluß an den Formalineintrag führt man
eine 30 Minuten dauernde thermische
Nachbehandlung des Ansatzes bei 90 bis 95°C
durch, kühlt dann ab und stellt einen schwach
alkalischen pH-Wert ein.

Das dünnflüssige Co-Kondensat weist einen
Feststoffgehalt von 34% auf und besitzt
Dispergierwirkung.

**Beispiel 3**

Dispergiermittel
Im Rührbehälter von Beispiel 1 werden
nacheinander
5.830 Gew.-Teile Wasser
1.334 Gew.-Teile festes Natriumhydroxid
1.250 Gew.-Teile Aminoessigsäure
1.567 Gew.-Teile Phenol sowie
967 Gew.-Teile Aceton
vorgelegt und bis zum Eintreten von
Acetonrückfluß erhitzt.

Zu dieser Vorlage läßt man aus einem
Vorratsgefäß insgesamt 5.000 Gew.-Teile
30%iger Formaldehydlösung einfließen, wobei
die Temperatur des Ansatzes bis zum Ende des
Formalineintrags auf 98°C ansteigen soll.

Im Anschluß an den Formalineintrag wird die
Lösung noch 1 Stunde bei 95°C gehalten und
nach dem Abkühlen auf Raumtemperatur
schwach alkalisch eingestellt.

Die orangerote niedrigviskose Harzlösung
weist einen Feststoffgehalt von 36 % auf und
erniedrigt die Viskosität wäßriger
Zementschlämmen.

**Beispiel 4**

Oberflächenaktives Mittel
Der Rührbehälter von Beispiel 1 wird in der
angegebenen Reihenfolge mit
1.000.Gew.-Teilen Wasser
350 Gew.-Teilen einer 56%igen
Calciumsulfitablauge der Fa. Chemiefaser
Lenzing (Österreich)
315 Gew.-Teilen Natriumsulfit sowie

360 Gew.-Teilen Methylethylketon
beschickt und diese Vorlage auf 60°C
aufgeheizt.

Anschließend setzt man aus einem
Vorratsgefäß insgesamt 1.250 Gew.-Teile
30%iger Formaldehydlösung zu dieser Vorlage,
wobei die Temperatur des Ansatzes auf 95°C
ansteigen soll.

Nach beendigtem Formalineintrag schließt sich
eine 15 Minuten dauernde thermische
Nachbehandlung des Reaktionsproduktes bei
95°C an, bevor auf Raumtemperatur abgekühlt
und ein schwach alkalischer pH-Wert eingestellt
wird.

Das in der dunkelbraunen Lösung enthaltene
Co-Kondensationsprodukt besitzt
grenzflächenaktive Eigenschaften und erniedrigt
z. B. die Oberflächenspannung von Wasser.

**Beispiel 5**

Retentions-/Verdickungsmittel
Im Rührbehälter nach Beispiel 1 werden
1.000 Gew.-Teile Wasser
25 Gew.-Teile Natriumsulfit
30 Gew.-Teile der Hydroxyethylcellulose
"Tylose H 300 P" von Hoechst sowie
44 Gew.-Teile Aceton vorgelegt unter kräftigem
Rühren auf 56°C erwärmt und zu dieser Vorlage
insgesamt 150 Gew.-Teile 30%iger
Formaldehydlösung zugesetzt, wobei die
Temperatur des Ansatzes auf 90°C ansteigen soll.

Nach beendigtem Formalineintrag kondensiert
man 1 Std. bei 95°C. Dabei muß die Lösung nach
Maßgabe des Kondensationsfortschrittes mit
insgesamt 750 Gew.-Teilen Wasser verdünnt
werden, um die Rührfähigkeit des Ansatzes zu
erhalten.

Das orangerote Co-Kondensat weist bei 20°C
und einem Feststoffgehalt von 6 % eine
Brookfield-Viskosität von 70 000 mPa.s auf. Es
verleiht Zementschlämmen gutes
Wasserrückhaltevermögen.

**Beispiel 6**

Retentions-/Verdickungsmittel
Das Reaktionsgefäß von Beispiel 1 wird mit
1.500 Gew.-Teilen Wasser
252 Gew.-Teilen Natriumsulfit
90 Gew.-Teilen Harnstoff sowie
435 Gew.-Teilen Diacetonalkohol
beschickt, auf 60°C erwärmt und insgesamt
1.500 Gew.-Teile 30%iger Formalehydlösung
zugesetzt. Während des Formalineintrags sorgt
man für ein Ansteigen der Temperatur auf 90 bis
95°C.

Im Anschluß an die Formalinzugabe führt man
ein 90 Minuten dauerndes Nacherhitzen des
Ansatzes bei 95°C durch. Dabei wird die Lösung
nach Maßgabe des Kondensationsfortschritts mit insgesamt 500 Gew.-Teilen Wasser verdünnt, um ihre Rührfähigtkeit zu erhalten. Nach dem Abkühlen auf Raumtemperatur wird schließlich ein schwach alkalischer pH-Wert eingestellt.

Die rote Lösung des Co-Kondensationsproduktes besitzt einen Feststoffgehalt von 24 % und eine Brookfield-Viskosität von 300 000 mPa.s (20°C). Das Produkt verdickt wäßrige Zementschlämmen und wirkt als Retentionsmittel.

## Patentansprüche

für die Verfragsstaaten: BE, CH, DE, FR, GB, IT, LI, NL, SE

1. Säuregruppen enthaltende, hydrophile Co-Kondensationsprodukte von Keton-Aldehyd-Harzen, erhältlich durch Co-Kondensation von Ketonen aus der Gruppe symmetrische oder unsymmetrische Ketone, die mindestens einen nichtaromatischen Rest enthalten, und/oder Cycloalkanone und Aldehyden mit Säuregruppen einführenden Verbindungen und mit Aminoplastbindnern und/oder aromatischen Verbindungen aus der Gruppe Phenole und andere reaktiv substituierte Aromaten und mehrkeringe Aromaten, und/oder deren Vorkondensaten oder Kondensationsprodukten, und/oder mit durch Behandlung von Holz mit Natriumsuslfit erhaltenen Ligninsulfonatharzen und/oder mit Cellulosederivaten aus der Gruppe Celluloseäther und Celluloseester in alkalischen pH-Bereich.

2. Co-Kondensationsprodukte nach Anspruch 1, dadurch gekennzeichnet, daß als Ketone symmetrische oder unsymmetrische Ketone mit acyclischen aliphatischen, araliphatischen und/oder aromatischen Resten, und/oder Cycloalkanone eingesetzt werden.

3. Co-Kondensate nach Anspruch 1 oder 2, dadurch gekennzeichnet, daß sie als Säuregruppen Carboxy-, Phosphono-, Sulfino-, Sulfo-, Sulfamido-, Sulfoxy-, Sulfoalkyloxy- und/oder Phosphonooxy-gruppen enthalten.

4. Co-Kondensationsprodukte nach einem der Ansprüche 1 bis 3, dadurch gekennzeichnet, daß das Molverhältnis Ketone/Aldehyde/Säuregruppen 1/1-6/0,02-2 ist.

5. Co-Kondensationsprodukte nach einem der Ansprüche 1 bis 4, dadurch gekennzeichnet, daß der Anteil an Aminoplastbindnern und/oder aromatischen Verbindungen bzw. deren Kondensationsprodukten und/oder Ligninsulfonatharzen und/oder Cellulosederivaten 2 bis 50 Gew.-%, insbesondere 10 bis 40 Gew.-%, bezogen auf das fertige Kondensationsprodukt, beträgt.

6. Verfahren zur Herstellung von Co-Kondensationsprodukten nach einem der Ansprüche 1 bis 5 durch Umsetzung von Ketonen aus der Gruppe symmetrische oder unsymmetrische Ketone, die mindestens einen nichtaromatischen Rest enthalten, und/oder Cycloalkanone und Aldehyden mit Säuregruppen einführenden Verbindungen und mit Aminoplastbildnern, aromatischen Verbindungen aus der Gruppe Phenole und andere reaktiv substituierte Aromaten und mehrkernige Aromaten, und/oder deren Vorkondensaten oder kondensationsprodukten, mit durch Behandlung von Holz mit Natriumsulfit erhaltenen Ligninsulfonatharzen und/oder mit Cellulosederivaten aus der Gruppe Celluloseäther und Celluloseester im alkalischen pH-Bereich, insbesondere bei einem pH-Wert 10 bis 12.

7. Verfahren nach Anspruch 6, dadurch gekennzeichnet, daß man als Säuregruppen einführende Verbindungen die entsprechenden reinen Säuren, Saltze dieser Säure mit ein- bis dreiwertigen Kationen oder Additionsverbindungen dieser Säuren mit Aldehyden oder Ketonen verwendet.

8. Verfahren nach Anspruch 6, dadurch gekennzeichnet, daß man als Säuregruppen einführende Verbindungen Säuregruppen enthaltende Aminoplastbildner, aromatische Verbindungen, Cellulosederivate und/oder deren Kondensationsprodukte verwendet.

9. Verfahren nach Anspruch 6 bis 8, dadurch gekennzeichnet, daß man als Aldehyde und/oder Ketone die Additionsverbindungen mit den den Säuregruppen entsprechenden Säuren verwendet.

10. Verwendung der Co-Kondensationsprodukte nach einem der Ansprüche 1 bis 5 als Verdickungsmittel, Retentionsmittel, oberflächenaktives Mittel, Dispergiermittel und/oder Verflüssigsmittel, insbesondere für wäßrige Systeme.

## Patentansprüche

für den Vertragsstaat: AT

1. Verfahren zur Herstellung von Co-Kondensationsprodukten von Keton-Aldehyd-Harzendurch Co-Kondensation von Ketonen aus der Gruppe symmetrischer oder unsymmetrischer Ketonen, die mindestens einen nichtaromatischen Rest enthalten und/oder Cycloalkanone und Aldehydenmit Säuregruppen einführenden Verbindungen und mit Aminoplastbildnern und/oder aromatischen Verbindungen aus der Gruppe Phenole und andere reaktiv substituierte Aromaten und mehrkernige Aromaten, und/oder deren Vorkondensaten oder Kondensationsprodukten, und/oder mit durch Behandlung von Holz mit Natriumsulfiterhaltenen Ligninsulfonatharzen und/oder mit Cellulosederivaten aus der Gruppe Celluloseether und Cellulose-Ester im alkalischen pH-Bereich.

2. Verfahren nach Anspruch 1, dadurch gekennzeichnet, daß als Ketone symmetrische oder unsymmetrische Ketonemit acyclischenaliphatischen, araliphatischen und/oder aromatischen Resten und/oder Cycloalkanoneverwendet werden.

3. Verfahren nach Anspruch 1 oder 2, <u>dadurch gekennzeichnet</u>, daß als Säuregruppene inführende Verbindungen Carboxy-, Phosphono-, Sulfino-, Sulfo-, Sulfamido-, Sulfoxy-, Sulfoalkyloxy-, Sulfinoalkyloxy- und/oder Phosphonooxygruppen einführende Verbindungen verwendet werden.

4. Verfahren nach einem der Ansprüche1 bis 3, <u>dadurch gekennzeichnet</u>, daß ein Molverhältnisvon Keton zu Aldehyd zu Säuregruppen von 1/1-6/0,02-2 verwendet wird.

5. Verfahren nach einem der Ansprüche 1 bis 4, <u>dadurch gekennzeichnet</u>, daß man Aminoplastbildner und/oder aromatische Verbindungen bzw. deren Kondensationsprodukte und/oder Ligninsulfonatharze und/oder Cellulosederivatein einer Mengevon 2 bis 50 Gew.-%, insbesondere 10 bis 40 Gew.-%, bezogen auf das fertige Kondensationsprodukt, verwendet.

6. Verfahren nach einem der Ansprüche 1 bis 5, <u>dadurch gekennzeichnet</u>, daß die Umsetzung bei einem pH-Wert von 10 bis 12 erfolgt.

7. Verfahren nach einem der Ansprüche 1 bis 6, <u>dadurch gekennzeichnet</u>, daß man als Säuregruppe einführende Verbindungen die entsprechenden reinen Säure, Saltze dieser Säuren mit ein- bis drie wertigen Kationen oder Additionsverbindungen dieser Säure mit Aldehyden oder Ketonen verwendet.

8. Verfahren nach einem der Ansprüche 1 bis 6, <u>dadurch gekennzeichnet</u>, daß man als Säuregruppen einführende Verbindungen Säuregruppen enthaltende Aminoplastbildner, aromatische Verbindungen, Cellulosederivate und/oder deren Kondensationsprodukte verwendet.

9. Verfahren nach einem der Ansprüche 1 bis 8, <u>dadurch gekennzeichnet</u>, daß man als Aldehyde und/oder Ketone die Additionsverbindungen mit den den Säuregruppen entsprechenden Säuren verwendet.

10. Verwendung der nach einem Verfahren der Ansprüche 1 bis 9 erhaltenen Co-Kondensationsprodukte als Verdickungsmittel, Retentionsmittel, ober flächenaktive Mittel, Dispergiermittel und/oder Verflüssigungsmittel, insbesondere fürvässrige Systeme.
**En

**Patentansprüche**

for the Contracting states: BE, CH, De, FR, GB, IT, LI, NL, SE

1. Acid group-containing, hydrophilic co-condensation products of ketone-aldehyde resins, obtainable by co-condensation of ketones from the group of symmetrical or asymmetrical ketones which contain at least one non-aromatic radical and/or cycloalkanones and aldehydes with acid group-introducing compounds and with aminoplast formers and/or aromatic compounds from the group of phenols and other reactive substituted aromatics and polynuclear aromatics and/or their pre-condensates or condensation products and/or with lignin sulphonate resins obtained by treatment of wood with sodium sulphite and/or with cellulose derivatives from the group of cellulose ethers and cellulose esters in the alkaline pH range.

2. Co-condensation products according to claim 1, characterised in that, as ketones, there are used symmetrical or asymmetrical ketones with acyclic aliphatic, araliphatic and/or aromatic radicals and/or cycloalkanones.

3. Co-condensation products according to claim 1 or 2, characterised in that, as acid groups, they contain carboxyl, phosphono, sulphino, sulpho, sulphamido, sulphoxy, sulphalkoxy, sulphinoalkyloxy and/or phosphonooxy groups.

4. Co-condensation products according to one of claims 1 to 3, characterised in thatthe mole ratio of ketones/aidehydes/acid groups is 1/1-6/0.02-2.

5. Co-condensation products according to one of claims 1 to 4, characterised in that the proportion of aminoplast formers andjor aromatic compounds or their condensation products and/or lignin sulphonate resins and/or cellulose derivatives amounts to 2 to 50 wt.%, especially 10 to 40 wt.%, referred to the final condensation product.

6. Process for the preparation of co-condensation products according to one of claims 1 to 5 by reaction of ketones from the group of symmetrical or asymmetrical ketones which contain at least one non-aromatic radical and/or cycloalkanones and aldehydes with acid groupintroducing compounds and with aminoplast formers, aromatic compounds from the group of phenols and other reactive substituted aromatics and polynuclear aromatics and/or their pre-condensates or condensation products with lignin sulphonate resins obtained by treatment of wood with sodium sulphite and/or with cellulose derivatives from the group of cellulose ethers and cellulose esters in the alkaline pH range, especially at a pH value of 10 to 12.

7. Process according to claim 6, characterised in that, as acid group-introducing compounds, one uses the corresponding pure acids, salts of these acids with mono- to trivalent cations or addition compounds of these acids with aldehydes or ketones.

8. Process according to claim 6, characterised in that, as acid group-introducing compounds, one uses acid group-containing aminoplast formers, aromatic compounds, cellulose derivatives and/or their condensation products.

9. Process according to claims 6 to 8, characterised in that, as aldehydes and/or ketones, one uses the addition compounds with the acids corresponding to the acid groups.

10. Use of the co-condensation products according to one of claims 1 to 5 as thickening agents, retention agents, surface-active agents, dispersion agents and/or liquefying agents, especially for aqueous systems.

## Claims

for the Contracting state: AT

1. Process for the preparation of co-condensation products of ketone-aldehyde resins by co-condensation of ketones from the group of symmetrical or asymmetrical ketones which contain at least one non-aromatic radical and/or cycloalkanones and aldehydes with acid groupintroducing compounds and with aminoplast formers and/or aromatic compounds from the group of phenols and other reactive substituted aromatics and polynuclear aromatics and/or their pre-condensates or condensation products and/or with lignin sulphonate resins obtained by treatment of wood with sodium sulphite and/or with cellulose derivatives from the group of cellulose ethers and cellulose esters in the alkaline pH range.

2. Process according to claim 1, characterised in that, as ketones, there are used symmetrical or asymmetrical ketones with acyclic aliphatic, araliphatic and/or aromatic radicals and/or cycloalkanones.

3. Process according to claim 1 or 2, characterised in that, as acid group-introducing compounds, there are used carboxyl, phosphono, sulphino, sulpho, sulphamido, sulphoxy, sulphalkoxy, sulphinoalkyloxy and/or phosphonooxy group-introducing compounds.

>4. Process according to one of claims 1 to 3, characterised in that a mole ratio of ketone/aldehyde/ acid groups of 1/1-6/0.02-2 is used.

5. Process according to one of claims 1 to 4, characterised in that one uses aminoplast formers and/or aromatic compounds or their condensation products and/or lignin sulphonate resins and/or cellulose derivatives in an amount of 2 to 50 wt.%, especially 10 to 40 wt.%, referred to the final condensation product.

6. Process according to one of claims 1 to 5, characterised in that the reaction takes place at a pH value of 10 to 12.

7. Process according to one of claims 1 to 6, characterised in that, as acid group-introducing compounds, one uses the corresponding pure acids, salts of these acids with mono- to trivalent cations or addition compounds of these acids with aldehydes or ketones.

8. Process according to one of claims 1 to 6, characterised in that, as acid group-introducing compounds, one uses acid group-containing aminoplast formers, aromatic compounds, cellulose derivatives and/or their condensation products.

9. Process according to one of claims 1 to 8, characterised in that, as aldehydes and/or ketones, one uses the addition compounds with the acids corresponding to the acid groups.

10. Use of the co-condensation products obtained according to a process of claims 1 to 9 as thickening agents, retention agents, surface-active agents, dispersion agents and/or liquefying agents, especially for aqueous systems.

## Revendications

pour les Etats contractants: BE, CH, DE, FR, GB, IT, LI, NL, SE

1. Produits de co-condensation hydrophiles, contenant des groupes acides, de résines cétone-aldéhyde, obtenus par co-condensation de cétones du groupe des cétones symétriques ou asymétriques contenant au moins un radical non aromatique, et/ou des cycloalcanones et d'aldéhydes avec des composés introduisant des groupes acides et avec des composés capables de former des aminoplastes et/ou des composés aromatiques du groupe des phénols et autres composés aromatiques à substituants réactifs et composés aromatiques polycycliques, et/ou leurs précondensats ou produits de condensation, et/ou avec des résines de ligninesulfonates obtenues par traitement du bois par le sulfite de sodium et/ou avec des dérivés cellulosiques du groupe des éthers cellulosiques et des esters cellulosiques en pH alcalin.

2. Produits de co-condensation selon la revendication 1, caractérisés en ce que l'on utilise en tant que cétones des cétones symétriques ou asymétriques contenant des radicaux aliphatiques acycliques, araliphatiques et/ou aromatiques, et/ou des cycloalcanones.

3. Co-condensats selon la revendication 1 ou 2, caractérisés en ce qu'ils contiennent en tant que groupes acides des groupes carboxy, phosphono, sulfino, sulfo, sulfamido, sulfoxy, sulfoalkyloxy, sulfinoalkyloxy et/ou phosphonoxy.

4. Produits de co-condensation selon l'une des revendications 1 à 3, caractérisés en ce que les proportions molaires cétones/aldéhydes/groupes acides sont de 1/1 à 6/0,02 à 2.

5. Produits de co-condensation selon l'une des revendications 1 à 4, caractérisés en ce que les proportions de composés capables de former des aminoplastes et/ou de composés aromatiques ou de leurs produits de condensation et/ou de résines de lignine-sulfonates et/ou de dérivés cellulosiques sont de 2 à 50 % en poids, plus spécialement de 10 à 40 % en poids, par rapport au produit de condensation fini.

6. Procédé de préparation des produits de co-condensation selon l'une des revendications 1 à 5 par réaction de cétones du groupe des cétones symétriques ou asymétriques contenant au moins un radical non aromatique et/ou des cycloalcanones et des aldéhydes avec des composés introduisant des groupes acides et avec des composés capables de former des aminoplastes, des composés aromatiques du groupe des phénols et d'autres composés aromatiques à substituants réactifs et composés aromatiques polycycliques, et/ou leurs précondensats ou produits de condensation, avec des résines de lignine-sulfonates obtenues par traitement du bois à l'aide du sulfite de sodium et/ou avec des dérivés cellulosiques du groupe des éthers cellulosiques et des esters cellulosiques en pH alcalin, en particulier à un pH de 10 à 12.

7. Procédé selon la revendication 6, caractérisé en ce que l'on utilise en tant que composés introduisant des groupes acides les acides purs correspondants, des sels de ces acides et de cations mono à tri-valents ou des composés d'addition de ces acides avec des aldéhydes ou des cétones.

8. Procédé selon la revendication 6, caractérisé en ce que l'on utilise en tant que composés introduisant les groupes acides des composés capables de former des aminoplastes et contenant des groupes acides, des composés aromatiques contenant des groupes acides, des dérivés cellulosiques contenant des groupes acides et/ou leurs produits de condensation.

9. Procédé selon les revendications 6 à 8, caractérisé en ce que l'on utilise en tant qu'aldéhydes et/ou cétones les composés d'addition avec les acides correspondant aux groupes acides.

10. Utilisation des produits de co-condensation selon l'une des revendications 1 à 5 en tant qu'agents épaississants, agents de rétention, agents tensio-actifs, agents dispersants et/ou agents fluidifiants, en particulier pour des systèmes aqueux.

**Revendications**

pour l'Etat contractant: AT
Procédé pour la préparation de produits de co-condensation de resines cétone-aldéhyde, obtenus par co-condensation de cétones du groupes des cétones symétriques ou asymétriques, contenant au moins un radical non aromatique, et/ou des cycloalcanones et d'aldéhydes avec des composés introduisant des groupes acides et avec des composés capables de former des aminoplastes et/ou des composés aromatiques du groupe des phénols et autres composés aromatiques à substituants réactifs et composés aromatiques polycycliques, et/ou leurs précondensats ou produits de condensation, et/ou avec des résines de lignine-sulfonates obtenues par traitement du bois par le sulfite de sodium et/ou avec des dérivés cellulosiques du groupe des éthers cellulosiques et des esters cellulosiques en pH alcalin.

2. Procédé selon la revendication 1, caractérisé en ce que l'on utilise en tant que cétones des cétones symétriques ou asymétriques contenant des radicaux aliphatiques acycliques, araliphatiques et/ou aromatiques, et/ou des cycloalcanones.

3. Procédé selon la revendication 1 ou 2, caractérisés en ce qu'on utilise en tant que composés introduisant des groupes acides, des composés introduisant des groupes carboxy, phosphono, sulfino, sulfo, sulfamido, sulfoxy, sulfoalkyloxy, sylfinoalkyloxy et/ou phosphonoxy.

4. Procédé selon l'une des revendications 1 à 3, caractérisé en ce que l'on met en oeuvre un rapport molaire cetone/aldéhyde/groupes acides de 1/1 à 6/0,002-2.

5. Procédé selon l'une des revendications 1 à 4, caracterisé en ce que l'on utilise des composés capables de former des aminoplastes et/ou des composés aromatiques ou leurs produits de condensation et/ou des résines de lignine-sulfonates et/ou des dérivés cellulosiques de 2 à 50 % en poids, notamment de 10 à 40 % en poids, par rapport au produit de condensation fini.

6. Procédé selon 1 une des revendications 1 à 5, caractérisé en ce que la reaction s'effectue dans domaine de pH de 10 à 12.

7. Procédé selon l'une des revendications 1 à 6, caractérisé en ce que l'on utilise en tant que composés introduisant des groupes acides les acides purs correspondants, des sels de ces acides et de cations mono à tri-valents ou des composés d'addition de ces acides avec des aldéhydes ou des cétones.

8. Procédé selon l'une des revendications 1 à 6, caracterisé en ce que l'on utilise en tant que composés introduisant les qroupes acides des composés capables de former des aminoplastes et contenant des groupes acides, des composés aromatiques contenant des groupes acides, des dérivés cellulosiques contenant des groupes acides et/ou leurs produits de condensation.

9. Procédé selon l'une des revendications 1 à 8, caractérisé en ce qur l'on utilise en tant qu aldéhydes et/ou cétones les composés d'addition avec les acides correspondant aux qroupes acides.

10. Utilisation des produits de co-condensation obtenus selon un procédé des revendications 1 à 9, en tant qu'agents épaississants, agents de rétention, agents tensioactifs, agents dispersants et/ou agents fluidifiants, notamment pour des systèmes aqueux.